# EUROPEAN PATENT SPECIFICATION

(11) **EP 4 047 059 B1**
(45) Date of publication and mention of the grant of the patent: **11.12.2024**
(21) Application number: 20876298.9
(22) Date of filing: 08.10.2020
(51) Int. Cl.: C09D 11/322, C09C 3/04

(54) **METHOD FOR PRODUCING PIGMENT COMPOSITION**
VERFAHREN ZUR HERSTELLUNG EINER PIGMENTZUSAMMENSETZUNG
PROCÉDÉ DE PRODUCTION DE COMPOSITION DE PIGMENT

(30) Priority: 18.10.2019 JP 2019191283
(43) Date of publication of application: 24.08.2022
(73) Proprietor: DIC Corporation, Tokyo 174-8520 (JP)
(72) Inventor: NAITO, Wakana, Kitaadachi-gun, Saitama 362-8577 (JP); HOTATE, Shoichi, Kitaadachi-gun, Saitama 362-8577 (JP); SUGO, Kenji, Kitaadachi-gun, Saitama 362-8577 (JP); GANBAYASHI, Hideki, Kitaadachi-gun, Saitama 362-8577 (JP)
(74) Representative: Kraus & Lederer PartGmbB
(86) International application number: PCT/JP2020/038067
(87) International publication number: WO 2021/075333

(56) References cited:
- WO-A1-03/010249
- JP-A- 2000 516 656
- JP-A- 2002 249 690
- JP-A- 2007 212 992
- JP-A- 2009 261 993
- JP-A- 2010 195 908
- JP-A- 2011 502 043
- JP-A- 2013 067 717
- JP-A- 2015 199 809
- JP-A- 2016 069 416
- JP-A- 2016 069 623
- JP-A- 2016 155 937
- JP-A- 2018 002 835
- US-A1- 2004 206 269
- US-A1- 2004 206 275
- US-A1- 2007 021 530

## Description

### Technical Field

The present invention relates to a method for producing a pigment composition.

### Background Art

Pigment compositions are used in a variety of printing such as inkjet printing. As a method for producing a pigment composition, it is known to process a raw material composition containing a pigment component and a liquid medium with a dispersing machine to obtain a pigment composition (for example, see PTL 1 below).

US 2004/206275 A1 and US 2004/206269 A1 describe methods of preparing modified organic colorant dispersions comprising the step of combining, in any order, i) an organic colorant; ii) an hydroxide reagent; and iii) an aqueous medium, to form a modified organic colorant dispersion. The methods further comprise a particle size reduction step. These steps can occur in either order. The organic colorant comprises at least one organic species having at least one ester or carboxylic acid group. Modified organic colorants and inkjet ink compositions are also disclosed.

WO 03/010249 A1 describes ink compositions said to have excellent imaging and a low tendency to foam. The ink compositions may contain one or more fluorochemical surfactants. Methods of coating a substrate by printing the ink composition onto a substrate are also describes. Substrates coated with an ink composition are further described.

US 2007/021530 A1 describes a method of preparing a pigment composition comprising the steps of combining a polymer and a pigment to form a mixture and heating the mixture to a temperature of between about 70° C and 250° C to form the pigment composition. The method may further comprise the step of dispersing the pigment composition in an aqueous medium to form an aqueous pigment dispersion. The pigment compositions and aqueous pigment compositions can be used in an inkjet ink composition, which is also described.

JP 2011 502043 A describes a process for forming a dispersion of milled solid particles of a compound comprising forming a milling mixture of a liquid medium, milling media having an average particle size of less than or equal to 300 µm, and a solid compound in a mixing vessel, and agitating the milling mixture with a mixer to contact the milling media and solid compound and to reduce the solid compound to a desired average particle size to form a dispersion of milled solid particles in the liquid medium, wherein the volume ratio of the milling media, rotor-stator having a gap, and the solid compound volume-weighted average equivalent sphere diameter particle size are all within prescribed limits.

### Citation List

### Patent Literature

PTL 1: Japanese Unexamined Patent Application Publication No. 2001-262038

### Summary of Invention

### Technical Problem

A pigment composition is required to have fewer coarse particles in terms of suppressing clogging of an ejection nozzle in printing and ensuring high ejection stability. To this end, the number of coarse particles may be reduced by repeatedly performing crushing and/or cracking of a raw material composition containing a pigment component and a liquid medium, but the increase in processing time leads to reduction in productivity. A method for producing a pigment composition is therefore required to efficiently reduce the number of coarse particles.

The present invention provides a method for producing a pigment composition that can efficiently reduce the number of coarse particles in the pigment composition.

### Solution to Problem

The present invention provides the method for producing a pigment composition for ink defined in claim 1. The method includes a processing step of crushing or cracking a pigment component in a raw material composition containing the pigment component and a liquid medium using a rotor-stator processing machine.

Also described herein, but not claimed as such, is a manufacturing apparatus for a pigment composition for ink. The manufacturing apparatus includes a rotor-stator processing machine configured to crush or crack a pigment component in a raw material composition containing the pigment component and a liquid medium, and a raw material supply unit configured to supply the raw material composition to the processing machine.

The method for producing a pigment composition and the manufacturing apparatus can efficiently reduce the number of coarse particles in the pigment composition.

### Advantageous Effects of Invention

According to the present invention, a method for producing a pigment composition that can efficiently reduce the number of coarse particles in the pigment composition is provided. The method for producing a pigment composition and the manufacturing apparatus can efficiently reduce the number of coarse particles having a particle size of 1.0 um or more.

### Brief Description of Drawings

FIG. 1 is a schematic cross section illustrating an example of a rotor-stator processing machine.
FIG. 2 is a schematic side view illustrating an example of a stator in the rotor-stator processing machine.
FIG. 3 is a schematic diagram for explaining a crushing process or a cracking process in the rotor-stator processing machine.

### Description of Embodiments

Embodiments of the present invention will be described in detail below. However, the present invention is not limited to the following embodiments and can be modified in various ways.

In the present description, a numerical range denoted by "to" refers to a range including numerical values provided before and after "to" as the minimum value and the maximum value. In numerical ranges provided in stages in the present description, the upper limit value or the lower limit value of a numerical range in a certain stage may be combined as appropriate with the upper limit value or the lower limit value of a numerical range in another stage. In a numerical range provided in the present description, the upper limit value or the lower limit value of the numerical range may be replaced by a value listed in Examples. "A or B" is intended to include at least one of A and B and may include both. Materials illustrated by example in the present description can be used singly or in combination of two or more unless otherwise specified. If a plurality of substances corresponding to a component are contained in a composition, the amount of the component in the composition means the total amount of these substances contained in the composition, unless otherwise specified. The word "step" is not limited to an independent step and encompasses a step that is not clearly distinguishable from another step as long as the step achieves an intended effect. "(Meth)acrylic acid" refers to a generic name of acrylic acids and corresponding methacrylic acids, and the same applies to other similar expressions such as "(meth)acrylate".

The method for producing a pigment composition according to the present embodiment is a method for producing a pigment composition for ink as defined in claim 1. The method includes a first processing step of crushing or cracking a pigment component in a raw material composition containing the pigment component and a liquid medium using a rotor-stator processing machine. The crushing means, for example, breaking an integral mass. The cracking means, for example, disintegrating an agglomeration. In the method for producing a pigment composition according to the present embodiment, a pigment composition can be obtained in the first processing step.

The pigment composition obtained according to the present invention may be used for obtaining ink or may be used as ink. The pigment composition obtained according to the present invention can be used, for example, as a pigment composition of printing ink (for example, inkjet printing ink).

A manufacturing apparatus for a pigment composition described herein is a manufacturing apparatus for a pigment composition for ink. The manufacturing apparatus includes a first processing machine of a rotor-stator type configured to crush or crack a pigment component in a raw material composition containing the pigment component and a liquid medium, and a raw material supply unit configured to supply the raw material composition to the first processing machine. Hereinafter "first processing machine of a rotor-stator type" is simply referred to as "rotor-stator processing machine".

In the rotor-stator processing machine, shearing force is applied to a raw material composition containing coarse particles between a rotor and a stator as described later to crush or crack the coarse particles. In the method for producing a pigment composition and the manufacturing apparatus, the rotor-stator processing machine can be used to reduce the number of coarse particles in the pigment composition efficiently and reduce the number of coarse particles having a particle size of 1.0 um or more. The method for producing a pigment composition and the manufacturing apparatus can suppress increase in processing time for producing a pigment composition with fewer coarse particles, thereby producing a pigment composition with fewer coarse particles with high productivity. The method for producing a pigment composition and the manufacturing apparatus can also reduce the number of coarse particles having a particle size of 0.5 um or more. In evaluating the reduction ratio of the number of coarse particles, the reduction ratios of the number of coarse particles determined when a raw material composition of the same composition is crushed or cracked are compared. When the pigment composition is processed by various processing machines, the performances of the processing machines can be compared using the rotation speed about 80% of the maximum rotation speed.

The method for producing a pigment composition and the manufacturing apparatus can efficiently reduce the number of coarse particles in the pigment composition while reducing the viscosity of the pigment composition. The method for producing a pigment composition and the manufacturing apparatus can reduce the particle size of a solid content in the pigment composition obtained by the crushing process or the cracking process. The method for producing a pigment composition and the manufacturing apparatus can provide excellent preservation stability (dispersion stability of a solid content) of the pigment composition obtained by the crushing process or the cracking process.

In the method for producing a pigment composition and the manufacturing apparatus, the rotor-stator processing machine is used. With this configuration, when a resin component is used, a high printing density can be achieved, compared under the condition that the composition and the mass ratio of the resin component to the pigment component are the same. In the method for producing a pigment composition and the manufacturing apparatus, when a resin component is used, a high adsorption ratio of the resin component to the pigment component can be achieved.

One of possible methods of reducing the number of coarse particles while reducing the processing time is to reduce the number of coarse particles in a single crushing or cracking process. To significantly reduce the number of coarse particles, a pulverization device for reducing the particle size of a solid content after the crushing process or the cracking process may be used to process a raw material composition containing a large number of coarse particles. In this case, pipe clogging or other inconvenience may occur in the pulverization device. In order to avoid such inconvenience, it is effective to perform preliminary crushing or preliminary cracking as preprocessing prior to the crushing process or the cracking process using the pulverization device. In the method for producing a pigment composition and the manufacturing apparatus, when the crushing process or the cracking process is performed in a second processing step for a mixture obtained by the first processing step, the number of coarse particles in the pigment composition can be further reduced efficiently. In particular, the number of coarse particles in the pigment composition can be reduced only by two processing steps (crushing step or cracking step). In the method for producing a pigment composition and the manufacturing apparatus, when the crushing process or the cracking process is performed in the second processing step for a mixture obtained by the first processing step, the time required to obtain a pigment composition having desired physical properties of the solid content (the number of coarse particles, the particle size, etc.) in the second processing step can be reduced.

The temperature in the first processing step is 50 to 80°C and preferably falls within the following range in terms of easily reducing the number of coarse particles efficiently, in terms of easily reducing the time required to obtain a pigment composition having desired physical properties of the solid content (the number of coarse particles, the particle size, etc.) in the second processing step, and in the case of using a resin component, in terms of accelerating dissolution of the resin component to easily improve the adsorption ratio of the resin component to the pigment component, and easily achieving excellent preservation stability. The temperature is preferably 55°C or higher and more preferably 60°C or higher. The temperature is preferably 75°C or lower, further preferably 70°C or lower, particularly preferably 65°C or lower, and much preferably 60°C or lower. From these points of view, the temperature is preferably 60 to 80°C.

The rotor-stator processing machine in the manufacturing apparatus for a pigment composition includes a rotor having a rotatable blade and a stator having a wall arranged on the outer peripheral side of the blade. The processing machine may be any one of a crushing machine, a cracking machine, a disperser, and the like. The rotor and the stator may be those commercially available and having any shape, and those having different shapes or the same shape may be used in combination. The combination can be selected according to the properties of the raw material composition because there are differences in raw material composition characteristics, shear rate (miniaturization ability), and heating during miniaturization, depending on the shapes. Typically, a rotor with many teeth facilitates miniaturization and generates much heat.

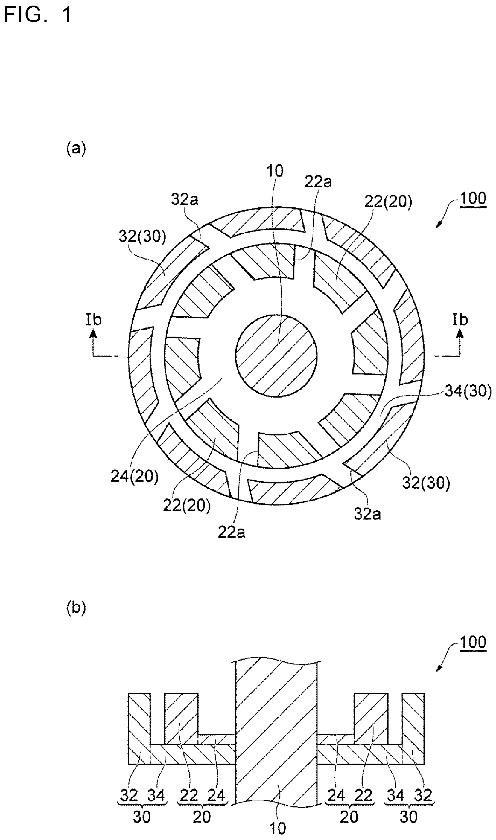

FIG. 1 (FIG. 1(a) and FIG. 1(b)) is a schematic cross section illustrating an example of a rotor-stator processing machine. A rotor-stator processing machine 100 illustrated in FIG. 1 includes a center shaft 10, a rotor 20, and a stator 30. Examples of the constituent material of the center shaft 10, the rotor 20, and the stator 30 include metal materials and ceramics.

The center shaft 10 is an elongated member and extends, for example, in the vertical direction. The center shaft 10 supports the rotor 20 and the stator 30.

The rotor 20 has an annular (for example, ring-shaped) blade 22 extending in the longitudinal direction of the center shaft 10 on the outer periphery of the rotor 20 and a connection part 24 connecting the blade 22 and the center shaft 10. The blade 22 can rotate around the center shaft 10. The blade 22 has an opening (through hole) 22a penetrating the blade 22 and, for example, has a plurality of openings 22a at intervals (for example, at equal intervals) along the peripheral direction of the blade 22. The opening direction of the openings 22a may be inclined relative to the radial direction. An end portion on the vertically upper side of each opening 22a may be open with no member of the rotor 20 arranged thereon. The number, the arrangement, and the shape of the openings 22a are not limited to particular examples.

The arrangement and the shape of the blade in the rotor of the rotor-stator processing machine are not limited to particular examples. For example, the blade is not limited to an annular member arranged on the outer periphery of the rotor and may have a shape extending from the center to the outer periphery of the rotor. The rotor may have a plurality of blades having a shape extending from the center to the outer periphery of the rotor. The blade having a shape extending from the center to the outer periphery of the rotor may have a streamlined shape.

The stator 30 has an annular (for example, ring-shaped) wall 32 extending in the longitudinal direction of the center shaft 10 on the outer periphery of the stator 30 and a connection part 34 connecting the wall 32 and the center shaft 10. The wall 32 is arranged on the outer peripheral side of the blade 22 in the rotor-stator processing machine 100. The wall 32 has an opening (through hole) 32a penetrating the wall 32 and, for example, has a plurality of openings 32a at intervals (for example, at equal intervals) along the peripheral direction of the wall 32. The opening direction of the opening 32a may be inclined relative to the radial direction.

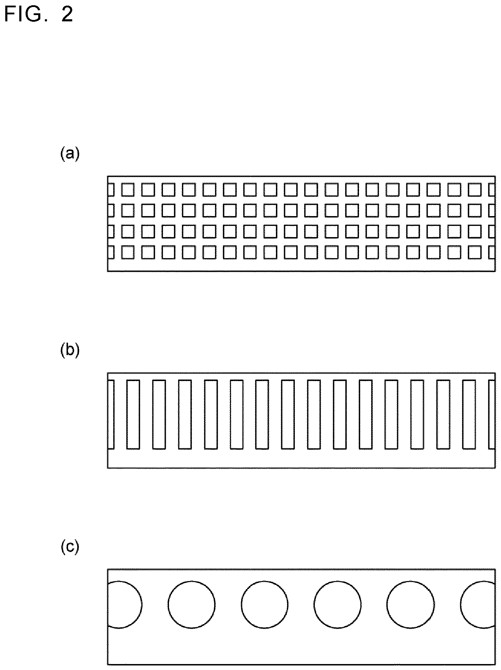

The number, the arrangement, and the shape of the opening of the wall in the stator are not limited to particular examples. FIG. 2 is a schematic side view illustrating an example of a stator (the wall of the stator) in the rotor-stator processing machine. Examples of the wall of the stator include a wall having openings (for example, openings in a quadrangular shape such as a square) arranged in an array (FIG. 2(a)), a wall having a plurality of rectangular openings arranged in a row (FIG. 2(b)), and a wall having a plurality of circular (for example, exact circle) openings arranged in a row (FIG. 2(c)). Examples of the shape of the openings include quadrangular shapes (square, rectangle, etc.) and circular shapes (exact circle, oval, etc.).

The stator may have a plurality of annular (for example, ring-shaped) walls extending in the longitudinal direction of the center shaft on the outer periphery of the stator. For example, the stator may include the wall 32 as a first wall, may include a second wall arranged on the outer peripheral side of the first wall in the rotor-stator processing machine, and may further include a third wall arranged on the outer peripheral side of the second wall in the rotor-stator processing machine. The number of walls is not limited to a particular number and may be four or more.

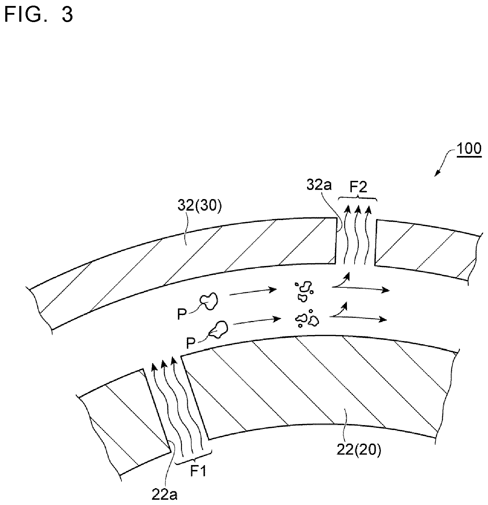

FIG. 3 is a schematic diagram for explaining the crushing process or the cracking process in the rotor-stator processing machine and illustrates a partially enlarged view of the outer peripheral portion of the rotor-stator processing machine 100 illustrated in FIG. 1. In the rotor-stator processing machine 100, for example, a raw material composition containing a pigment component and a liquid medium is supplied to the periphery of the center shaft 10, and thereafter, as illustrated in FIG. 3, the raw material composition passes through the opening 22a (in the drawing, a channel F1) in the blade 22 of the rotor 20 to reach a space between the blade 22 and the wall 32 of the stator 30. In this space, the shear force generated by the rotational motion of the blade 22 is applied to coarse particles P (solid content) to crush or crack the coarse particles P. Then, a part of the composition containing the crushed or cracked particles flows to the outer peripheral side of the wall 32 through the opening 32a of the wall 32 (in the drawing, a channel F2), and the rest of the composition further moves through the space between the blade 22 and the wall 32, where the particles are further crushed or cracked by the shear force. The pigment component in the raw material composition containing the pigment component and the liquid medium is thus crushed or cracked by the crushing process or the cracking process in the rotor-stator processing machine 100.

The shear rate (miniaturizing ability) applied by a processing unit including the rotor and the stator is preferably 50000 s⁻¹ or higher, more preferably 75000 s⁻¹ or higher, further preferably 90000 s⁻¹ or higher, particularly preferably 100000 s⁻¹ or higher, much preferably 120000 s⁻¹ or higher, extremely preferably 150000 s⁻¹ or higher, and even more preferably 170000 s⁻¹ or higher in terms of easily reducing the number of coarse particles efficiently, in terms of easily reducing the particle size of the solid content after processing, in terms of easily reducing the viscosity of the pigment composition, and in terms of easily achieving excellent preservation stability of the pigment composition. The upper limit of the shear rate may be, for example, 400000 s⁻¹ or lower and may be 250000 s⁻¹ or lower. From these points of view, the shear rate is preferably 50000 to 400000 s⁻¹. The shear rate [s⁻¹] can be determined by dividing the circumferential speed [m/s] of the blade of the rotor by the gap [m] between the blade and the wall of the stator.

The rotor-stator processing machine may have a plurality of processing units (crushers or crackers) each including a rotor and a stator. Feeding the raw material composition from a processing unit having a low shear rate to a processing unit having a high shear rate tends to suppress clogging and facilitates efficient reduction of the number of coarse particles. The rotor-stator processing machine may have a plurality of processing units (may have a multistage processing unit) along the center shaft extending in the vertical direction. When the rotor-stator processing machine has a plurality of processing units along the center shaft, it is preferable to arrange a processing unit having a higher shear rate as it is closer to the vertically lower side, in terms of easily reducing the number of coarse particles efficiently.

The rotor-stator processing machine may be an in-line processing machine. In the in-line processing machine, the raw material composition is continuously supplied. For example, the processing machine may be installed in the middle of a processing path (for example, a crushing process path and a cracking process path; for example, a pipe) to continuously process the raw material composition (the crushing process or the cracking process). In the in-line processing machine, since the entire raw material composition is forced to pass through the processing machine, the entire raw material composition can be easily processed uniformly in a short time, compared with when a batch processing machine that processes only the raw material composition around the rotor is used alone. The in-line processing machine can easily reduce the number of coarse particles efficiently and therefore can easily suppress pipe clogging in the processing machine in the second processing step. In particular, the use of the in-line processing machine as the rotor-stator processing machine can more effectively reduce the number of coarse particles having a diameter of 0.5 um or more in the final pigment composition, compared with when the batch processing machine is used alone. The in-line processing machine easily reduces the viscosity of the pigment composition. In the in-line processing machine, the raw material composition may be circulated. In the batch processing machine, the raw material composition is intermittently supplied, and the raw material composition is refilled in each process (crushing process or cracking process).

Examples of the rotor-stator processing machine include the apparatus name "magic LAB" from IKA Japan K.K. (in-line, maximum circumferential speed: 41 m/s, maximum rotational speed: 26000 rpm); the apparatus name "VERSO" from Silverson Nippon Limited (high shear in-line mixer, in-line, maximum circumferential speed: 20 m/s, maximum rotational speed: 10000 rpm); and the apparatus name "L5M-A" from Silverson Nippon Limited (batch, maximum circumferential speed: 20 m/s, maximum rotational speed: 10000 rpm). As a processing machine from IKA Japan K.K., a processing machine including UTR module (ULTRA-TURRAX), DR module (DISPAX-REACTOR), MK module, MKO module, or CMX module can be used. The DR module has three stages of processing units (stages) each including a rotor and a stator and can easily reduce the number of coarse particles efficiently, because the shear rate can be adjusted by a combination of rotors and stators. For example, when 2P/4M/6F processing units are used in order from the vertically upper side, the processing units can be arranged such that the shear rate increases toward the vertically lower side.

The rotor-stator processing machine preferably has a rotational speed in the range of 1000 to 30000 rpm, more preferably in the range of 3000 to 25000 rpm, and particularly preferably in the range of 8000 to 20000 rpm, in terms of easily reducing the number of coarse particles efficiently, in terms of easily reducing the particle size of the solid content after processing, in terms of easily reducing the viscosity of the pigment composition, and in terms of easily achieving excellent preservation stability of the pigment composition.

The rotor-stator processing machine has a maximum circumferential speed in the range of 15 m/s to 35 m/s, in terms of easily reducing the number of coarse particles efficiently, in terms of easily reducing the particle size of the solid content after processing, in terms of easily reducing the viscosity of the pigment composition, and in terms of easily achieving excellent preservation stability of the pigment composition.

The manufacturing apparatus for a pigment composition may have any raw material supply unit that can supply the raw material composition to the rotor-stator processing machine. The raw material supply unit may be, for example, a pipe and a pump that supplies a raw material supply unit.

The method for producing a pigment composition according to the present embodiment may include a second processing step of crushing or cracking the pigment component in a mixture (pigment composition) obtained in the first processing step. In the method for producing a pigment composition according to the present embodiment, the pigment composition may be obtained in the second processing step instead of the first processing step. The manufacturing apparatus for a pigment composition may include a second processing machine configured to crush or crack the pigment component in a mixture obtained by crushing or cracking the pigment component in the first processing machine (rotor-stator processing machine). In these cases, the number of coarse particles in the pigment composition can be further reduced efficiently, and the physical properties of the solid content (the number of coarse particles, the particle size, etc.) can be easily adjusted to desired physical properties. The manufacturing apparatus for a pigment composition may include a supply unit (pipe, pump, etc.) that supplies the mixture obtained in the first processing step to the second processing machine.

Examples of the second processing machine include high pressure homogenizer, paint shaker, beads mill, roll mill, sand mill, ball mill, attritor, basket mill, sand mill, sand grinder, dyno mill, DISPERMAT, SC mill, spike mill, agitator mill, juice mixer, ultrasonic homogenizer, nanomizer, dissolver, disperser, high speed impeller disperser, kneader, and planetary mixer. For example, the apparatus name "Star Burst" from Sugino Machine Limited can be used as the high pressure homogenizer. The pressure in the high pressure homogenizer is preferably 50 to 245 MPa, more preferably 80 to 200 MPa, further preferably 100 to 200 MPa, and particularly preferably 130 to 200 MPa. When the pigment component includes carbon black, the processing at low pressure is possible, and the longer service life of the apparatus and improvement in production volume per unit time can be easily achieved.

The manufacturing apparatus for a pigment composition may crush or crack the pigment component by allowing the mixtures obtained in the first processing step to collide with each other at an oblique angle in the second processing machine. In this case, for example, the second processing machine may have an oblique-type collision chamber. The mixtures obtained in the first processing step are injected under pressure from multiple directions to allow the mixtures obtained in the first processing step to collide with each other.

The manufacturing apparatus for a pigment composition may crush or crack the pigment component by allowing the mixture obtained in the first processing step to collide with a ball-shaped hard body rotatably supported (for example, supported with a bearing) in the second processing machine. In this case, for example, the second processing machine may have a ball-type collision chamber. The mixture obtained in the first processing step is injected under pressure to allow the mixture obtained in the first processing step to collide with the hard body. The hard body may be rotatably supported eccentrically from an injection axis. Examples of the material of the hard body include ceramic and sintered diamond.

Examples of a chamber used in the second processing machine include, in addition to an oblique-type collision chamber and a ball-type collision chamber, separation chamber, single nozzle chamber, and slit chamber. An example of these chambers is a chamber of the apparatus name "Star Burst" from Sugino Machine Limited. It is preferable to use an oblique-type collision chamber in terms of avoiding wear of the hard body over long-time use in the oblique-type collision chamber, and achieving a pulverization capability higher than that of a chamber that does not use the force of collision (for example, single-nozzle chamber).

The raw material composition contains a pigment component (solid content) and a liquid medium and may further contain an additive other than the pigment component and the liquid medium. The pigment composition can contain the same kinds of components as the raw material composition. The solid concentration of the raw material composition may be 1 to 60 mass%, 10 to 50 mass%, or 15 to 40 mass% of the total amount of the raw material composition.

The pigment component may be at least one selected from the group consisting of pigments and pigment derivatives.

The pigments may be inorganic pigments or organic pigments. Examples of the inorganic pigments include iron oxide, carbon black (for example, carbon black produced by known methods such as a contact process, a furnace process, and a thermal process), and titanium oxide. Example of the organic pigments include azo pigments (insoluble azo pigments (monoazo pigments, disazo pigments, pyrazolone pigments, etc.), benzimidazolone pigments, betanaphthol pigments, naphthol AS pigments, condensed azo pigments, etc.), polycyclic pigments (quinacridone pigments, perylene pigments, perinone pigments, anthraquinone pigments, dioxazine pigments, thioindigo pigments, isoindolinone pigments, isoindoline pigments, quinophthalone pigments, diketopyrrolopyrrole pigments, etc.), phthalocyanine pigments, dye chelates (basic dye chelates, acid dye chelates, etc.), nitro pigments, nitroso pigments, and aniline black. These inorganic and organic pigments can be used suitably in the production of printing inks (for example, inkjet printing inks). The pigments can be used alone or in combination of two or more.

The carbon black may be #2300, #980, #960, #900, #52, #45L, #45, #40, #33, MA100, MA8, MA7, and the like available from Mitsubishi Chemical Corporation; Regal series, Monarch series, and the like available from Cabot Corporation; and Color Black FW1, Color Black series, Printex series, Special Black series, NIPEX series, and the like available from Orion Engineered Carbons SA.

The pigments may be yellow pigments such as C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

The pigments may be magenta pigments such as C.I. Pigment Red 5, 7, 12, 48(Ca), 48(Mn), 57(Ca), 57:1, 112, 122, 123, 146, 149, 150, 168, 176, 184, 185, 202, 209, 213, 269, and 282.

The pigments may be cyan pigments such as C.I. Pigment Blue 1, 2, 3, 15, 15:1, 15:2, 15:3, 15:4, 15:6, 16, 22, 60, 63, and 66.

The pigments may be orange pigments such as C.I. Pigment Orange 5, 13, 16, 17, 34, 36, 43, 51, 64, and 71.

The pigments may be violet pigments such as C.I. Pigment Violet 1, 3, 5:1, 16, 19, 23, and 38.

The pigments may be green pigments such as C.I. Pigment Green 1, 4, 7, 8, 10, 17, 18, 36, 50, and 58.

The pigments may be dry pigments (pigments in the form of dry powder) or wet pigments (pigments in the form of wet cake). The magenta pigments are preferably wet pigments in terms of easily reducing the number of coarse particles efficiently, and in terms of easily reducing the time required to obtain a pigment composition having the desired physical properties of the solid content (the number of coarse particles, the particle size, etc.) in the second processing step. The cyan pigments are preferably dry pigments in terms of easily reducing the number of coarse particles efficiently, and in terms of easily reducing the time required to obtain a pigment composition having the desired physical properties of the solid content (the number of coarse particles, the particle size, etc.) in the second processing step. The pigments may be a mixture or a solid solution including two or more pigments.

The pigment derivatives may be compounds in which a functional group is introduced into a pigment. Examples of the pigment that yields a pigment derivative include phthalocyanine pigments, azo pigments, anthraquinone pigments, quinacridone pigments, and diketopyrrolopyrrole pigments. Examples of the functional group include carboxy groups, sulfo groups, amino groups, nitro groups, acid amide groups, carbonyl groups, carbamoyl groups, phthalimide groups, and sulfonyl groups. The pigment derivatives can impart dispersion stability to the pigment composition or the ink to enable prevention of formation of coarse particles over time and prevention of sedimentation of the pigment component over time.

The primary particle size of the pigment component is preferably 1.0 um or less and more preferably 0.01 to 0.5 um in terms of suppressing sedimentation of the pigment component over time even more effectively. The primary particle size refers to the value of the number-average particle size measured using a transmission electron microscope (TEM).

The amount of the pigment component is preferably 1 to 50 mass%, more preferably 10 to 30 mass%, and further preferably 15 to 25 mass% of the total amount of the raw material composition. In these cases, moderate fluidity can be easily achieved to enable efficient and uniform processing in each process, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

Examples of the liquid medium include aqueous media (such as water) and organic solvents. When a high pressure homogenizer is used as the second processing machine, it is preferable to use a high-boiling solvent (for example, a solvent with a boiling point of 100°C or higher), considering that a high pressure is applied.

Examples of the water include pure water such as ion exchange water, ultrafiltered water, reverse osmosis water, and distilled water; and ultrapure water. It is preferable to use water sterilized by UV irradiation, hydrogen peroxide addition, or the like as the water, in terms of preventing growth of fungi or bacteria in long-term storage of the pigment composition or the ink.

The water is preferably used in the range of 10 to 90 mass% of the total amount of the liquid medium contained in the pigment composition of the present invention, and preferably used in the range of 15 to 80 mass% in producing an aqueous ink.

The organic solvents may be water-soluble organic solvents. The water-soluble organic solvents can easily wet the surface of the pigment component efficiently, so that the resin component (for example, resin neutralized product) dissolved in water is easily adsorbed on the pigment component, and the time required to reach the desired physical properties is easily reduced.

Examples of the water-soluble organic solvents include glycols such as ethylene glycol, diethylene glycol, triethylene glycol, tetraethylene glycol, propylene glycol, dipropylene glycol, tripropylene glycol, polyethylene glycol, and polypropylene glycol; diols such as butanediol, pentanediol, and hexanediol; glycol esters such as propylene glycol laurate; diethylene glycol ethers such as diethylene glycol monoethyl, diethylene glycol monobutyl, diethylene glycol monohexyl, and carbitol; glycol ethers such as cellosolve, including propylene glycol ether, dipropylene glycol ether, or triethylene glycol ether; alcohols (excluding glycols) such as methanol, ethanol, isopropyl alcohol, 1-propanol, 2-propanol, 1-butanol, 2-butanol, butyl alcohol, and pentyl alcohol; sulfolane, esters, ketones, lactones such as γ-butyrolactone; lactams such as N-(2-hydroxyethyl)pyrrolidone and 2-pyrrolidone; and glycerin and polyalkylene oxide adducts thereof. The water-soluble organic solvents can be used alone or in combination of two or more.

The amount of the water-soluble organic solvent is preferably 10 to 500 parts by mass, more preferably 15 to 200 parts by mass, and more preferably 15 to 150 parts by mass per 100 parts by mass of the pigment component contained in the raw material composition. By using the water-soluble organic solvent in the range above, the adsorption ratio of the resin component on the surface of the pigment component is improved, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved). Examples of the water-soluble organic solvent that can improve the adsorption ratio include triethylene glycol, glycerin, 2-pyrrolidone, 1-(2-hydroxyethyl)-2-pyrrolidone, dipropylene glycol, propylene glycol, and 1,5-pentanediol.

When a high pressure homogenizer is used to produce the pigment composition or when the inkjet printing ink produced using the pigment composition is applied to thermal inkjet printing described later, it is preferable to use a high-boiling solvent having a boiling point of 100°C or higher as the organic solvent. The use of a high-boiling solvent having a boiling point of 100°C or higher as the organic solvent is also preferable because wetting of the pigment is accelerated and, consequently, the resin is easily adsorbed on the pigment and preservation stability is improved.

Examples of the high-boiling solvent include glycerin, 2-pyrrolidone, 1-(2-hydroxyethyl)-2-pyrrolidone, dipropylene glycol, propylene glycol, and 1,5-pentanediol.

The liquid medium is preferably a liquid medium having a dispersion term (δD¹), a polar term (δP¹), and a hydrogen bonding term (δH¹) within the following range, in order to obtain an ink that has even higher preservation stability and with which clogging of an ink ejection nozzle is less likely to occur in the initial stage of ink ejection, and to obtain a pigment composition used to produce such an ink.

The dispersion term (δD¹) of the liquid medium (a) is preferably in the range of 12 to 24, more preferably 14 to 21, and particularly preferably 16 to 19.

The polar term (δP¹) of the liquid medium (a) is preferably in the range of 4 to 17, more preferably 6 to 15, and particularly preferably 8 to 13.

The hydrogen bonding term (δH¹) of the liquid medium (a) is preferably in the range of 6 to 43, more preferably 9 to 35, and particularly preferably 9 to 30.

Examples of the liquid medium having a dispersion term (δD¹), a polar term (δP¹), and a hydrogen bonding term (δH¹) within the range above include triethylene glycol, glycerin, 2-pyrrolidone, 1-(2-hydroxyethyl)-2-pyrrolidone, dipropylene glycol, propylene glycol, and 1,5-pentanediol.

The values of the dispersion term (δD¹), the polar term (δP¹), and the hydrogen bonding term (δH¹) of the liquid medium are the values recorded in the computer software Hansen Solubility Parameters in Practice 4th Edition 4.1.07 (HSPiP).

The liquid medium having a dispersion term (δD¹), a polar term (δP¹), and a hydrogen bonding term (δH¹) in the range above is preferably used in the range of 10 to 95 mass% of the total amount of the liquid medium contained in the pigment composition, and more preferably used in the range of 50 to 80 mass%.

The liquid medium contained in the pigment composition is preferably used in the range of 30 to 98 mass% of the total amount of the pigment composition of the present invention, and preferably used in the range of 60 to 95 mass% in producing an aqueous ink.

The liquid medium used in the pigment composition of the present invention is preferably a combination of the water described above with the high-boiling solvent or the liquid medium having a dispersion term (δD¹), a polar term (δP¹), and a hydrogen bonding term (δH¹), because if so, the resin component such as a pigment dispersion resin is easily adsorbed on the surface of the pigment component. In particular, when a high pressure homogenizer is used to produce the pigment composition of the present invention or when the inkjet printing ink produced using the pigment composition is applied to thermal inkjet printing described later, a combination of the water with the high-boiling solvent or the liquid medium having a dispersion term (δD¹), a polar term (δP¹), and a hydrogen bonding term (δH¹) is preferably used as the liquid medium, because wetting of the pigment is accelerated and, consequently, the resin is easily adsorbed on the pigment and preservation stability is improved.

It is preferable that the liquid medium satisfies at least one of the followings, in terms of easily reducing the number of coarse particles efficiently, and in terms of easily reducing the time required to obtain a pigment composition having the desired physical properties of the solid content (the number of coarse particles, the particle size, etc.) in the second processing step.
- The liquid medium preferably contains at least one selected from the group consisting of glycols, lactams, and glycerin.
- The liquid medium preferably contains at least one selected from the group consisting of triethylene glycol, triethylene glycol and dipropylene glycol.
- The liquid medium preferably contains at least one selected from the group consisting of N-(2-hydroxyethyl)pyrrolidone and 2-pyrrolidone.
- When the pigment component contains carbon black, the liquid medium preferably contains at least one selected from the group consisting of N-(2-hydroxyethyl)pyrrolidone, 2-pyrrolidone, triethylene glycol, and glycerin.
- When the pigment component contains magenta pigment, the liquid medium preferably contains at least one selected from the group consisting of 2-pyrrolidone, triethylene glycol, dipropylene glycol, and glycerin.
- When the pigment component contains cyan pigment, the liquid medium (a) preferably contains at least one selected from the group consisting of dipropylene glycol, N-(2-hydroxyethyl)pyrrolidone, 2-pyrrolidone, triethylene glycol, and glycerin.
- When the pigment component contains yellow pigment, the liquid medium (a) preferably contains at least one selected from the group consisting of propylene glycol, N-(2-hydroxyethyl)pyrrolidone, 2-pyrrolidone, triethylene glycol, and glycerin.

The liquid medium is preferably used in the range of 40 to 90 mass% of the total amount of the pigment composition of the invention and preferably used in the range of 60 to 85 mass% in producing an aqueous ink.

The raw material composition may contain a resin component. Examples of the resin component include pigment dispersion resins and binder resins. The resin component may be conventionally known resins. For example, radical polymers can be used, and it is preferable to use a radical polymer having an aromatic cyclic structure or a heterocyclic structure. In this case, the resin component is easily adsorbed on the pigment component by the π-π interaction between the resin component and the pigment component, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

When a radical polymer having an anionic group is used as the resin component (for example, pigment dispersion resin), it is preferable to use a radical polymer (neutralized product) in which some or all of the anionic groups are neutralized by a basic compound. The neutralization facilitates dissolution of the resin component in the liquid medium including water, accelerates adsorption on the surface of the pigment component, and facilitates keeping a good dispersion state. As a result, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

An example of the aromatic cyclic structure or the heterocyclic structure is a cyclic structure introduced into the radical polymer by using a monomer having an aromatic cyclic structure or a heterocyclic structure. The aromatic cyclic structure is preferably a benzene ring structure and more preferably a styrene-derived structure. By using a resin component that is a radial polymer having an aromatic cyclic structure or a heterocyclic structure, adsorption of the resin component on the pigment component can be enhanced, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The radical polymer that can be used as the resin component is, for example, a polymer obtained by radical polymerization of various monomers.

The monomer may be a monomer having an aromatic cyclic structure when an aromatic cyclic structure is introduced into the resin component. The monomer may be a monomer having a heterocyclic structure when a heterocyclic structure is introduced.

Examples of the monomer having an aromatic cyclic structure include styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, α-methylstyrene, p-methyl-α-methylstyrene, vinylnaphthalene, and vinylanthracene.

Examples of the monomer having a heterocyclic structure include vinylpyridine-based monomers such as 2-vinylpyridine and 4-vinylpyridine.

When a polymer having both an aromatic cyclic structure and a heterocyclic structure is used as the radical polymer, a combination of a monomer having an aromatic cyclic structure and a monomer having a heterocyclic structure can be used as the monomer.

The resin component is preferably a radical polymer having an aromatic cyclic structure. The monomer is therefore preferably a monomer having an aromatic cyclic structure and more preferably at least one selected from the group consisting of styrene, α-methylstyrene, and tert-butylstyrene.

The amount of the monomer having an aromatic cyclic structure or a heterocyclic structure is preferably 20 mass% or more, more preferably 40 mass% or more, and further preferably 50 to 95 mass% of the total amount of monomers, in terms of further enhancing the adsorption of the resin component to the pigment component.

The monomer may be a monomer having an anionic group in terms of producing a radical polymer having an acid value in the range described below as the resin component.

Examples of the monomer having an anionic group include monomers having anionic groups, such as carboxy groups, sulfo groups, and phosphate groups. The monomer having an anionic group is preferably a monomer having a carboxy group and more preferably at least one selected from the group consisting of acrylic acid and methacrylic acid. In these cases, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The amount of the monomer having an anionic group is preferably 5 to 80 mass%, more preferably 5 to 60 mass%, and further preferably 5 to 50 mass% of the total amount of monomers that can be used to produce the resin component, in terms of easily obtaining a radical polymer having an acid value in the range described below.

In addition to the monomers mentioned above, other monomers can be used, if necessary, as the monomers that can be used to produce the resin component. Examples of the other monomers include methyl (meth)acrylate, n-propyl (meth)acrylate, isopropyl (meth)acrylate, n-butyl (meth)acrylate, sec-butyl (meth)acrylate, tert-butyl (meth)acrylate, 2-ethylbutyl (meth)acrylate, 1,3-dimethylbutyl (meth)acrylate, hexyl (meth)acrylate, 2-ethylhexyl (meth)acrylate, octyl (meth)acrylate, ethyl (meth)acrylate, n-butyl (meth)acrylate, 2-methylbutyl (meth)acrylate, pentyl (meth)acrylate, heptyl (meth)acrylate, nonyl (meth)acrylate, 3-ethoxypropyl (meth)acrylate, 3-ethoxybutyl (meth)acrylate, dimethylaminoethyl (meth)acrylate, 2-hydroxyethyl (meth)acrylate, 2-hydroxybutyl (meth)acrylate, ethyl-α-(hydroxymethyl)(meth)acrylate, dimethylaminoethyl (meth)acrylate, hydroxyethyl (meth)acrylate, hydroxypropyl (meth)acrylate, phenyl (meth)acrylate, benzyl (meth)acrylate, phenylethyl (meth)acrylate, diethylene glycol (meth)acrylate, triethylene glycol (meth)acrylate, polyethylene glycol (meth)acrylate, glycerin (meth)acrylate, bisphenol A (meth)acrylate, dimethyl maleate, diethyl maleate, and vinyl acetate. These monomers can be used alone or in combination of two or more. One of such acrylates or methacrylates may be used alone, or a combination of acrylate and methacrylate may be used as the other monomers.

The resin component may be, for example, a polymer having a linear structure formed by radical polymerization of monomers, a polymer having a branched (grafted) structure, or a polymer having a cross-linked structure. The monomer arrangement of each polymer is not limited to particular examples, and a random polymer or a block polymer can be used.

The polymer having a cross-linked structure can be produced by using a monomer having a cross-linkable functional group as the monomer. Examples of the monomer having a cross-linkable functional group include poly(meth)acrylates of polyhydric alcohols, such as ethylene glycol di(meth)acrylate, propylene glycol di(meth)acrylate, polyethylene glycol di(meth)acrylate, poly(oxyethylene oxypropylene) glycol di(meth)acrylate, tri(meth)acrylates of alkylene oxide adducts of glycerin; glycidyl (meth)acrylate; and divinylbenzene.

The resin component may be a polymer having a structural unit derived from the monomers described above, but preferably a polymer obtained by polymerization of only a monomer having an anionic group and a monomer having an aromatic cyclic structure or a heterocyclic structure.

The resin component is preferably a polymer having a styrene-derived structural unit and a (meth)acrylic acid-derived structural unit and more preferably at least one selected from the group consisting of styrene-(meth)acrylic acid copolymers and styrene-(meth)acrylic acid-based ester-(meth)acrylic acid copolymers. The polymer having a styrene-derived structural unit and a (meth)acrylic acid-derived structural unit preferably has an acid value in the range described below. The aromatic ring moiety in the styrene-derived structural unit is firmly adsorbed on the surface of the pigment component, and the carboxy group in the (meth)acrylic acid-derived structural unit has a high affinity for water, so that high dispersion stability is easily achieved. Accordingly, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The styrene-(meth)acrylic acid copolymer may be any one of styrene-acrylic acid copolymers, styrene-methacrylic acid copolymers, and styrene-acrylic acid-methacrylic acid copolymers but preferably at least one selected from the group consisting of styrene-acrylic acid copolymers and styrene-acrylic acid-methacrylic acid copolymers. In this case, the adsorbability on the pigment component and the dispersibility in water are easily adjusted. As a result, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

In the styrene-(meth)acrylic acid copolymer, the total amount of the styrene-derived structural unit, the acrylic acid-derived structural unit, and the methacrylic acid-derived structural unit is preferably 80 to 100 mass% and more preferably 90 to 100 mass% of the total amount of structural units of the styrene-(meth)acrylic acid copolymer.

The radical polymerization rates (reaction rates) of the monomers in radical polymerization are assumed to be almost the same, and the use ratio (the ratio prepared) of each monomer is assumed to be the same as the ratio of the structural unit derived from the monomer that constitutes the radical polymer.

The radical polymer can be produced, for example, by radical polymerization of the monomers by methods such as bulk polymerization, solution polymerization, suspension polymerization, and emulsion polymerization.

In producing the radical polymer, commonly known polymerization initiator, chain transfer agent (polymerization regulator), surfactant, defoamer, and the like can be used if necessary.

Examples of the polymerization initiator include 2,2'-azobis(2,4-dimethylvaleronitrile), 2,2'-azobisisobutyronitrile, 1,1'-azobis(cyclohexane-1-carbonitrile), benzoyl peroxide, dibutyl peroxide, and butyl peroxybenzoate. The amount of the polymerization initiator is preferably 0.1 to 10 mass% of the total amount of monomers used in the production of the radical polymer.

When a radical polymer obtained by solution polymerization is used, the resin component may be a radical polymer pulverized by drying and crushing after removing a solvent contained in a radical polymer solution obtained by solution polymerization. When the resin component that is a pulverized radical polymer is used in combination with a water-soluble organic solvent and a basic compound, the resin component is neutralized by the basic compound in a first step, dissolves in the liquid medium containing a water-soluble organic solvent, and comes to be adsorbed on the surface of the pigment component wetted by the liquid medium. As a result, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The resin component is preferably classified by a mesh sieve with a pore size (diameter) of 1 mm or less.

The acid value of the resin component (for example, pigment dispersion resin) is preferably 60 to 300 mgKOH/g, more preferably 80 to 250 mgKOH/g, and further preferably 100 to 200 mgKOH/g. It is particularly preferable to use the resin component having an acid value of 120 to 180 mgKOH/g. In these cases, a good dispersion state is easily kept because the adsorption of the resin component on the pigment component is increased and an adequate affinity for the liquid medium (for example, a liquid medium containing water and a water-soluble organic solvent) is easily achieved. Thus, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The acid value is preferably an acid value derived from the anionic group such as carboxy group, sulfo group, and phosphate group. The acid value is a numerical value measured in accordance with the Japanese Industrial Standards "K0070: 1992. Test Methods for acid value, saponification value, ester value, iodine value, hydroxyl value and unsaponifiable matter of chemical products" except that tetrahydrofuran is used instead of diethyl ether as a solvent. The acid value refers to the amount (mg) of potassium hydroxide required to completely neutralize 1 g of the resin component.

The weight-average molecular weight of the resin component (for example, pigment dispersion resin) is preferably in the range of 2000 to 40000, more preferably 5000 to 30000, even more preferably 5000 to 25000, preferably 6000 to 20000, and particularly preferably 8000 to 12000. In these cases, agglomeration with the adjoining pigment component is suppressed, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved). The "weight-average molecular weight" is a value measured by gel permeation chromatography (GPC) and a value converted in terms of the molecular weight of polystyrene used as a standard substance.

The amount of the resin component (for example, pigment dispersion resin) is preferably 5 to 200 parts by mass and more preferably 10 to 100 parts by mass, per 100 parts by mass of the pigment component. With this amount, a good dispersion state is easily kept because of a sufficient affinity for the liquid medium (for example, water), and the resin component is easily adsorbed on the pigment component. Accordingly, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved). In addition, the amount of a free resin component that is not adsorbed on the pigment component is decreased to facilitate improvement in ink ejection performance. Furthermore, agglomeration of the pigment component due to the free resin component is easily suppressed to facilitate stabilization of ink.

The raw material composition may contain a basic compound. When the resin component has an anionic group, the basic compound neutralizes the anionic group. The neutralization of the resin component by the basic compound increases the affinity for the aqueous medium of the pigment component adsorbing the resin component. As a result, coarse particles are easily reduced, the dispersion state of the solid content in the pigment composition is easily stabilized, formation of coarse particles over time is easily prevented, and sedimentation of the solid content over time is easily suppressed.

For example, the basic compound may be an inorganic basic compound or an organic basic compound. Examples of the inorganic basic compound include hydroxides of alkali metals such as potassium and sodium; carbonates of alkali metals such as potassium and sodium; hydroxides of alkaline earth metals such as calcium and barium; and carbonates of calcium and barium. Examples of the organic basic compound include amino alcohols such as triethanolamine, N,N-dimethanolamine, N-ethylethanolamine, dimethylethanolamine, and N-butyldiethanolamine; morpholines such as morpholine, N-methylmorpholine, and N-ethylmorpholine; piperazines such as N-(2-hydroxyethyl)piperazine and piperazine hexahydrate; and ammonium hydroxide. The basic compound is preferably an alkali metal hydroxide (potassium hydroxide, sodium hydroxide, lithium hydroxide, etc.) and more preferably potassium hydroxide, because the efficiency of neutralizing the resin component is high so that the dispersion stability of the pigment component adsorbing the resin component in the aqueous medium is easily improved.

When a resin component having an anionic group is used, it is preferable to use the basic compound in such a range that the neutralization ratio of the resin component is 80 to 120%. In this case, the affinity of the neutralized resin component for the aqueous medium is enhanced, and as a result, the dispersion stability of the pigment component adsorbing the resin component in the aqueous medium is easily improved. The neutralization ratio can be calculated, for example, from the following equation. Neutralization ratio (%) = (mass [g] of basic compound × 56 × 1000)/(acid value of resin component × equivalent of basic compound × mass [g] of resin component) × 100

The pigment composition obtained according to the present invention can be used as an ink by dilution to a desired concentration by the liquid medium described above and/or by addition of additives such as a resin component (binder such as acrylic resin and polyurethane resin described above), a drying inhibitor, a penetrating agent, a surfactant, a preservative, a viscosity regulator, a pH regulator, a chelating agent, a plasticizer, an antioxidant, and a UV absorber. The resultant ink may be subjected to centrifugation or filtration.

Examples of the ink include paints for automobiles or construction materials; and printing inks such as inkjet printing inks, offset inks, gravure inks, flexo inks, and silk screen inks. When the ink is used as an inkjet printing ink, the amount of the pigment component in the ink is preferably 1 to 10 mass% of the total amount of the ink.

The liquid medium may be a water-soluble organic solvent in terms of preventing drying of the ink and adjusting the viscosity or concentration of the ink in a suitable range. The water-soluble organic solvent may be the water-soluble organic solvent described above as a component of the raw material composition. Examples of the water-soluble organic solvent include lower alcohols such as ethanol and isopropyl alcohol; ethylene oxide adducts of alkyl alcohols such as ethylene glycol hexyl ether and diethylene glycol butyl ether; and propylene oxide adducts of alkyl alcohols such as propylene glycol propyl ether, in terms of enhancing the penetration of the ink into a recording medium.

Examples of the drying inhibitor include glycerin, ethylene glycol, diethylene glycol, triethylene glycol, triethylene glycol mono-n-butyl ether, polyethylene glycol with a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. The drying inhibitor may be the same compound as the aforementioned water-soluble organic solvent used in the raw material composition. Therefore, when the water-soluble organic solvent is already used in the raw material composition, the water-soluble organic solvent can also serve as a drying inhibitor.

The penetrating agent can be used to improve penetration into a recording medium or to adjust a dot size on a recording medium. Examples of the penetrating agent include lower alcohols such as ethanol and isopropyl alcohol; glycol monoethers of alkyl alcohols such as ethylene glycol hexyl ether, diethylene glycol butyl ether, and propylene glycol propyl ether.

The surfactant can be used to adjust ink properties such as surface tension. Non-limiting examples of the surfactant include various anionic surfactants, nonionic surfactants, cationic surfactants, and amphoteric surfactants. At least one selected from the group consisting of anionic surfactants and nonionic surfactants is preferable. The surfactants can be used alone or in combination of two or more.

Examples of the anionic surfactants include alkylbenzene sulfonates, alkylphenyl sulfonates, alkylnaphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecylbenzene sulfonate, isopropylnaphthalene sulfonate, monobutylphenylphenol monosulfonate, monobutylbiphenyl sulfonate, and dibutylphenylphenol disulfonate.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol, and polyethylene glycol-polypropylene glycol block copolymers. Among these, at least one selected from the group consisting of polyoxyethylene nonylphenyl ether, polyoxyethylene octylphenyl ether, polyoxyethylene dodecylphenyl ether, polyoxyethylene alkyl ether, polyoxyethylene fatty acid esters, sorbitan fatty acid esters, polyoxyethylene sorbitan fatty acid esters, fatty acid alkylolamides, acetylene glycol, oxyethylene adducts of acetylene glycol, and polyethylene glycol-polypropylene glycol block copolymers is preferred.

Other examples of the surfactant are silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipids, and lysolecithin.

In the pigment composition for ink obtained by the above method, it is preferable that 20 to 60 mass% of the resin component of the total amount of the resin component is adsorbed on the pigment component, because if so, the resultant pigment composition is less likely to have viscosity increased over time and has extremely high preservation stability. Here, the mass ratio of the resin component adsorbed on the pigment component to the total amount of the resin component [the mass of the resin component adsorbed on the pigment component/the mass of the total amount of the resin component] (hereinafter simply referred to as "resin adsorption ratio") refers to the value calculated by the following method.

A particle charge detector (product name: PCD-04 available from Spectris Co., Ltd.) was used to measure the streaming potential in the range of ±2500 mV between platinum electrodes of a sample cell. The pigment composition was placed in the sample cell and titrated with a titrant (0.01 N, Poly-DADMAC). The amount of charge was determined by titration based on the potential difference made by the sample cell and the movement of the moving piston (i.e. the streaming potential of the liquid). The titration was terminated when the streaming potential exceeded zero (the potential became positive). The resin adsorption ratio was obtained by dividing the amount of drop at the inflection point by the amount of drop at a streaming potential of zero and then multiplying the divided value by 100.

The resin adsorption ratio is more preferably in the range of 20 to 50 mass% and particularly preferably in the range of 25 to 40 mass% in order to produce an inkjet printing ink having extremely high preservation stability, because significant increase in viscosity over time is less likely to occur, and having fewer coarse particles of a particle size of 1.0 um or more in the pigment composition, and capable of producing a printed matter having high color reproducibility.

### [Examples]

The present invention will be described in detail with examples below, but the present invention is not limited to these examples.

### <Production of Styrene-Acrylic Acid Copolymer A>

### (Styrene-Acrylic Acid Copolymer A)

In a reaction vessel with a stirring apparatus, a dropping apparatus, and a reflux apparatus, 100 parts by mass of methyl ethyl ketone was charged and then stirred while the reaction vessel was purged with nitrogen. Subsequently, the reaction vessel was heated, and with methyl ethyl ketone being refluxed, a mixture of 77 parts by mass of styrene, 10 parts by mass of acrylic acid, 13 parts by mass of methacrylic acid, and 8 parts by mass of a polymerization catalyst (product name: V-59 from Wako Pure Chemical Industries, Ltd.) was dropwise added from the dropping apparatus over 2 hours. In the middle of dropwise addition, the temperature in the reaction vessel was kept at 80°C. After completion of dropwise addition, the reaction was allowed to continue at the same temperature for additional 25 hours. After the end of reaction, the inside of the reaction vessel was left to cool and then methyl ethyl ketone was added to produce a solution with a solid content concentration of 50 mass%. After this solution was dried, the dried product was crushed into powder of 1 mm or smaller to yield a styrene-acrylic acid copolymer A. The styrene-acrylic acid copolymer A had an acid value of 150 mgKOH/g and a weight-average molecular weight of 8800.

The weight-average molecular weight is a value measured by gel permeation chromatography (GPC) and a value converted in terms of the molecular weight of polystyrene used as a standard substance. The measurement was performed by the apparatus under the conditions below.
Liquid feeding pump: LC-9A (from Shimadzu Corporation)
System controller: SLC-6B (from Shimadzu Corporation)
Auto injector: S1L-6B (from Shimadzu Corporation)
Detector: RID-6A (from Shimadzu Corporation)
Data processing software: Sic480II data station (from System Instruments Co., Ltd.)
Column: GL-R400 (guard column) + GL-R440 + GL-R450 + GL-R400M (from Hitachi Chemical Company, Ltd.)
Elution solvent: THF (tetrahydrofuran)
Elution flow rate: 2 mL/min
Column temperature: 35°C

### (Styrene-Acrylic Acid Copolymer B)

A styrene-acrylic acid copolymer B was obtained by the same procedure as that of the styrene-acrylic acid copolymer A, except that the amount of styrene was changed to 74 parts by mass, the amount of acrylic acid was changed to 11 parts by mass, and the amount of methacrylic acid was changed to 15 parts by mass. The styrene-acrylic acid copolymer B had an acid value of 170 mgKOH/g and a weight-average molecular weight of 11000.

### <Preparation of Pigment Composition>

### (Black Pigment Composition)

### [Example A1]

A raw material composition (pigment concentration: 25 mass%, solid concentration: 35 mass%) was prepared by mixing 375 g of black pigment (available from Mitsubishi Chemical Corporation, carbon black, #960, dry pigment), 150 g of the styrene-acrylic acid copolymer A, 412 g of triethylene glycol, 495 g of pure water, and 68 g of a 34 mass% aqueous potassium hydroxide solution.

The raw material composition was fed into a rotor-stator processing machine (apparatus name: magic LAB from IKA Japan K.K., 3-stage type, processing units (rotors and stators) 2P/4M/6F in order from the vertically upper side, in-line type). Subsequently, the first processing (crushing process or cracking process) was performed at a circumferential speed of 34 m/s (shear rate: 170000 s⁻¹) and a rotational speed of 20000 rpm in five passes while heating to 60°C to yield a first pigment composition (slurry). Then, the first pigment composition was subjected to the second processing (crushing process or cracking process, 140 MPa, 1 pass) using a high pressure homogenizer (apparatus name: Star Burst from Sugino Machine Limited, oblique-type collision chamber) to yield a second pigment composition.

### [Example A2]

A raw material composition was prepared by the same procedure as in Example A1, and a first pigment composition was prepared by performing the first processing. Then, the first pigment composition was subjected to the second processing (140 MPa, 1 pass) using a high pressure homogenizer (apparatus name: Star Burst from Sugino Machine Limited, ball-type collision chamber) to yield a second pigment composition.

### [Reference Example A3]

A raw material composition was prepared by the same procedure as in Example A1. Then, the raw material composition was fed into a rotor-stator processing machine (apparatus name: L5M-A from Silverson Nippon Limited, square-hole high shear screen, batch-type). Subsequently, the first processing was performed at a circumferential speed of 16 m/s (shear rate: 87000 s⁻¹) and a rotational speed of 8000 rpm for five minutes while heating to 60°C to yield a first pigment composition. Then, the first pigment composition was subjected to the second processing (crushing process or cracking process, 140 MPa, 1 pass) by the same procedure as in Example A2 to yield a second pigment composition.

### [Example A4]

A raw material composition was prepared by the same procedure as in Example A1. Then, the raw material composition was fed into a rotor-stator processing machine (apparatus name: VERSO from Silverson Nippon Limited, square-hole high shear screen, in-line type). Subsequently, the first processing was performed at a circumferential speed of 16 m/s (shear rate: 87000 s⁻¹) and a rotational speed of 8000 rpm in five passes while heating to 60°C to yield a first pigment composition. Then, the first pigment composition was subjected to the second processing (crushing process or cracking process, 140 MPa, 1 pass) by the same procedure as in Example A2 to yield a second pigment composition.

### [Example A5]

A pigment composition was produced by the same procedure as in Example A1 except that the circumferential speed was changed to 17 m/s (shear rate: 85000 s⁻¹) and the rotation speed was changed to 10000 rpm.

### [Comparative Example A1]

A raw material composition was prepared by the same procedure as in Example A1. The raw material composition was fed into a disper mixer (apparatus name: MAZELA ZZ-1000/1000S from EYELA, maximum circumferential speed: 15 m/s, maximum rotation speed: 3000 rpm). Subsequently, the first processing (crushing process or cracking process) was performed by stirring for 30 minutes at a circumferential speed of 12 m/s and a rotational speed of 2400 rpm while heating to 60°C to yield a first pigment composition. Then, the first pigment composition was subjected to the second processing (crushing process or cracking process, 140 MPa, 1 pass) by the same procedure as in Example A2 to yield a second pigment composition.

### (Red Pigment Composition)

### [Example B1]

A raw material composition (pigment concentration: 24 mass%, solid concentration: 28 mass%) was prepared by mixing 1500 g of red pigment (FASTOGEN SUPER MAGENTA RY WET pigment from DIC Corporation, pigment concentration: 32 mass%, wet pigment), 95 g of the styrene-acrylic acid copolymer B, 356 g of triethylene glycol, and 49 g of a 34 mass% aqueous potassium hydroxide solution.

A first pigment composition was prepared by performing the first processing by the same procedure as in Example A1. Then, the first pigment composition was subjected to the second processing (crushing process or cracking process, 200 MPa, 2 passes) using a high pressure homogenizer (Star Burst from Sugino Machine Limited, oblique-type collision chamber) to yield a second pigment composition.

### [Example B2]

A second pigment composition was prepared using a first pigment composition similar to that of Example B1 by the same procedure as in Example B1 except that the first pigment composition was prepared by performing the first processing by the same procedure as in Example A2.

### [Reference Example B3]

A second pigment composition was prepared using a first pigment composition similar to that of Example B1 by the same procedure as in Example B1 except that the first pigment composition was prepared by performing the first processing by the same procedure as in Reference Example A3.

### [Example B4]

A second pigment composition was prepared using a first pigment composition similar to that of Example B1 by the same procedure as in Example B1 except that the first pigment composition was prepared by performing the first processing by the same procedure as in Example A4.

### [Comparative Example B1]

A second pigment composition was prepared using a first pigment composition similar to that of Example B1 by the same procedure as in Example B1 except that the first pigment composition was prepared by performing the first processing by the same procedure as in Comparative Example A1.

### <Evaluation of Pigment Composition>

The number of coarse particles, the particle size, the viscosity, and the preservation stability were evaluated by the following procedure using the first pigment composition and the second pigment composition. The printing density and the resin adsorption ratio were evaluated by the following procedure using the second pigment composition. The results are listed in Table 1 and Table 2.

### (Number of Coarse Particles)

Using a particle size distribution measuring apparatus (Accusizer 780 from Particle Sizing Systems, APS, number count), the number of particles with a diameter of 1.0 um or more and the number of particles with a diameter of 0.5 um or more were counted by the following procedure. The pigment composition was diluted with pure water such that the sensitivity was within a range of 1000 to 4000 particles/mL. The number of particles with a diameter of 1.0 um or more and the number of particles with a diameter of 0.5 um or more included in the diluted pigment composition were counted three times using a particle size distribution measuring apparatus. Subsequently, the mean value of values each obtained by multiplying the measured value of particle count by a dilution concentration was calculated as the number of coarse particles. For Comparative Example A1, the viscosity was too high to make evaluation, because the number of coarse particles was extremely large.

### (Particle size)

The pigment composition was put into a cell of about 4 mL. The particle size was measured by detecting scattering light of laser light under an environment at 25°C using a NANOTRAC particle size distribution measuring apparatus "UPA150" from MicrotracBEL Corporation. The volume-average particle size (Mv), the number-average particle size (Mn), D50, D90, and D95 were measured as particle sizes.

### (Viscosity)

After 1.0 mL of the pigment composition with a pigment concentration adjusted to 13% was put into in a sample cup, the viscosity of the pigment composition was measured using a TV-20 viscometer from Toki Sangyo Co., Ltd. under an environment at 25°C. For Comparative Example A1, the viscosity was too high to make evaluation, because the number of coarse particles was extremely large, the particle size was excessively large, and the adsorption of the resin component on the pigment component was insufficient.

### (Preservation Stability)

The pigment composition was sealed in a polypropylene container and stored at 60°C for one week. The respective ratios of change of the volume-average particle size (Mv), the viscosity, and the number of coarse particles with a diameter of 0.5 um after storage to the volume-average particle size (Mv), the viscosity, and the number of coarse particles with a diameter of 0.5 um before storage were calculated. For Comparative Example B1, the viscosity was too high to count the number of coarse particles, because the number of coarse particles was extremely large, the particle size was excessively large, and the adsorption of the resin component on the pigment component was insufficient, after storage.

Those with the ratios of change within the range of 10% were deemed to have excellent preservation stability, those with the ratios of change exceeding 10% and within 15% were deemed to have good preservation stability, and those with the ratios of change exceeding 15% were deemed to have insufficient preservation stability.

### (Printing Density)

### [Production of Inkjet Recording Ink]

Using a batch centrifugal machine (from KOKUSAN Co., Ltd.), the pigment composition was centrifuged at 25°C with a centrifugal force of 134000 G for a dwell time of 10 minutes. The supernatant was decanted to yield a purified pigment composition. The pigment composition obtained by centrifugation was mixed with 8.0 parts by mass of 2-pyrrolidone, 8.0 parts by mass of triethylene glycol monobutyl ether, 3.0 parts by mass of glycerin, 0.5 parts by mass of Surfynol 440 (from Nissin Chemical Co., Ltd.), and 47.2 parts by mass of ion exchange water to yield an aqueous inkjet recording ink. The pigment concentration of the ink produced using a black pigment composition was 2.5 mass%, and the pigment concentration of the ink produced using a red pigment composition was 3.5 mass%.

### [Production of Printed Matter]

The inkjet recording ink was charged into a cartridge of an inkjet printer ENVY4500 (from HP Inc.). Subsequently, after a cleaning function installed in the printer is run once, an image having a 100% solid portion was printed on commercially available PPC paper (available from Otsuka Corporation, product number: 10PPCHWA4N) in the plain paper/standard printing mode to produce a printed matter.

### [Measurement of Printing Density]

The color of the 100% solid portion of the printed matter was evaluated using "eXact" from X-Rite Inc., and the density of the print pattern was obtained as an evaluation value. The higher evaluation value indicates that the color is produced well (highly rated).

### (Resin Adsorption Ratio)

A particle charge detector (product name: PCD-04 available from Spectris Co., Ltd.) was used to measure the streaming potential in the range of ±2500 mV between platinum electrodes of a sample cell. The pigment composition was placed in the sample cell and titrated with a titrant (0.01 N, Poly-DADMAC). The amount of charge was determined by titration based on the potential difference made by the sample cell and the movement of the moving piston (i.e. the streaming potential of the liquid). The titration was terminated when the streaming potential exceeded zero (the potential became positive). The resin adsorption ratio was obtained by dividing the amount of drop at the inflection point by the amount of drop at a streaming potential of zero and then multiplying the divided value by 100.

**[Table 1]**

| Black | Crushing step | Crushing method | Number of coarse particles | | Particle size (nm) | | | | | Viscosity (mPa·s) | Preservation stability | | | Printing density | Resin adsorption ratio |
|---|---|---|---|---|---|---|---|---|---|---|---|---|---|---|---|
| | | | >1.0 µm | >0.5 µm | Mv | Mn | D50 | D90 | D95 | | Mv | Viscosity | Number of coarse particles | | |
| Example A1 | 1 | Rotor-stator A (in-line) | 1000 | 11000 | 112 | 67 | 112 | 197 | 231 | 28 | -8% | 87% | -15% | 1.003 | 32% |
| | 2 | Oblique collision | 500 | 2700 | 107 | 64 | 99 | 169 | 197 | 6 | -1% | -7% | -1% | | |
| Example A2 | 1 | Rotor-stator A (in-line) | 1000 | 11000 | 112 | 67 | 112 | 197 | 231 | 28 | -8% | 87% | -15% | 0.998 | 32% |
| | 2 | Ball collision | 600 | 5000 | 110 | 59 | 94 | 192 | 234 | 6 | 7% | -10% | -2% | | |
| Reference Example A3 | 1 | Rotor-stator B (batch) | 4000 | 34000 | 132 | 69 | 119 | 220 | 260 | 25 | 15% | 189% | -22% | 0.975 | 34% |
| | 2 | Ball collision | 600 | 7000 | 92 | 62 | 86 | 139 | 158 | 5 | 5% | -9% | 1% | | |
| Example A4 | 1 | Rotor stator C (in-line) | 3000 | 20000 | 149 | 80 | 125 | 235 | 283 | 19 | 2% | 121% | -4% | 0.979 | 33% |
| | 2 | Ball collision | 600 | 4000 | 100 | 59 | 91 | 163 | 191 | 6 | -2% | -8% | -2% | | |
| Example A5 | 1 | Rotor-stator A (in-line) | 3000 | 18000 | 128 | 67 | 115 | 214 | 257 | 33 | 14% | 135% | 58% | 0.974 | 31% |
| | 2 | Oblique collision | 700 | 6000 | 109 | 68 | 102 | 198 | 240 | 7 | 8% | 2% | 9% | | |
| Comparative Example A1 | 1 | Disper mixer | Not measurable | Not measurable | 236 | 73 | 162 | 368 | 746 | Not measurable | 52% | Not measurable | Not measurable | 0.951 | 16% |
| | 2 | Ball collision | 4000 | 8000 | 133 | 89 | 126 | 193 | 217 | 5 | 56% | 363% | 26% | | |

**[Table 2]**

| Red | Crushing step | Crushing method | Number of coarse particles | | Particle size (nm) | | | | | Viscosity (mPa·s) | Preservation stability | | | Printing density | Resin adsorption ratio |
|---|---|---|---|---|---|---|---|---|---|---|---|---|---|---|---|
| | | | >1.0 µm | >0.5 µm | Mv | Mn | D50 | D90 | D95 | | Mv | Viscosity | Number of coarse particles | | |
| Example B1 | 1 | Rotor-stator A (in-line) | 2000 | 7000 | 235 | 154 | 223 | 338 | 389 | 41 | 8% | -5% | -46% | 0.945 | 19% |
| | 2 | Oblique collision | 80 | 400 | 128 | 76 | 116 | 203 | 242 | 8 | 6% | 3% | 6% | | |
| Example B2 | 1 | Rotor-stator A (in-line) | 2000 | 7000 | 235 | 154 | 223 | 338 | 389 | 41 | 8% | -5% | -46% | 0.903 | 22% |
| | 2 | Ball collision | 100 | 400 | 129 | 75 | 107 | 187 | 221 | 16 | 9% | 10% | 8% | | |
| Reference Example B3 | 1 | Rotor-stator B (batch) | 3000 | 13000 | 249 | 143 | 225 | 404 | 472 | 48 | 13% | 65% | -22% | 0.870 | 20% |
| | 2 | Ball collision | 100 | 600 | 128 | 83 | 119 | 196 | 225 | 4 | 18% | 21% | 12% | | |
| Example B4 | 1 | Rotor-stator C (in-line) | 3000 | 11000 | 235 | 136 | 221 | 359 | 416 | 44 | 17% | 71% | -1% | 0.874 | 23% |
| | 2 | Ball collision | 100 | 400 | 125 | 78 | 116 | 194 | 228 | 5 | 7% | 2% | 11% | | |
| Comparative Example B1 | 1 | Disper mixer | 4000 | 16000 | 316 | 158 | 226 | 597 | 980 | 165 | 11% | 19% | Not measurable | 0.842 | 19% |
| | 2 | Ball collision | 2000 | 9000 | 240 | 155 | 225 | 358 | 417 | 23 | 51% | 283% | Not measurable | | |

### Reference Signs List

10 center shaft
20 rotor
22 blade
22a opening
24 connection part
30 stator
32 wall
32a opening
34 connection part
100 rotor-stator processing machine
F1, F2 channel

## Claims

1. A method for producing a pigment composition for ink, the method comprising a first processing step of crushing or cracking a pigment component in a raw material composition containing the pigment component and a liquid medium using a rotor-stator processing machine, wherein
the processing machine is an in-line processing machine into which the raw material composition is continuously supplied,
the temperature in the first processing step is 50 to 80°C, and
the processing machine has a circumferential speed in a range of 15 m/s to 35 m/s.

2. The method for producing a pigment composition according to claim 1, wherein the pigment composition is a pigment composition for inkjet printing ink.

3. The method for producing a pigment composition according to claim 1 or 2, further comprising a second processing step of crushing or cracking the pigment component in a mixture obtained in the first processing step.

4. The method for producing a pigment composition according to claim 3, wherein the second processing step is a step of crushing or cracking the pigment component by allowing the mixtures obtained in the first processing step to collide with each other at an oblique angle.

5. The method for producing a pigment composition according to claim 3, wherein the second processing step is a step of crushing or cracking the pigment component by allowing the mixture obtained in the first processing step to collide with a ball-shaped hard body rotatably supported.

## Patentansprüche

1. Verfahren zur Herstellung einer Pigmentzusammensetzung für Tinte, wobei das Verfahren einen ersten Verarbeitungsschritt des Zerkleinerns oder Crackens einer Pigmentkomponente in einer Rohmaterialzusammensetzung, die die Pigmentkomponente und ein flüssiges Medium enthält, unter Verwendung einer Rotor-Stator-Verarbeitungsmaschine umfasst, wobei
die Verarbeitungsmaschine eine In-Line-Verarbeitungsmaschine ist, in die die Rohmaterialzusammensetzung kontinuierlich zugeführt wird,
die Temperatur im ersten Verarbeitungsschritt 50 bis 80°C beträgt, und
die Verarbeitungsmaschine eine Umfangsgeschwindigkeit in einem Bereich von 15 m/s bis 35 m/s aufweist.

2. Verfahren zur Herstellung einer Pigmentzusammensetzung nach Anspruch 1, wobei die Pigmentzusammensetzung eine Pigmentzusammensetzung für Tintenstrahldrucktinte ist.

3. Verfahren zur Herstellung einer Pigmentzusammensetzung nach Anspruch 1 oder 2, ferner umfassend einen zweiten Verarbeitungsschritt des Zerkleinerns oder Crackens der Pigmentkomponente in einer Mischung, die im ersten Verarbeitungsschritt erhalten wird.

4. Verfahren zur Herstellung einer Pigmentzusammensetzung nach Anspruch 3, wobei der zweite Verarbeitungsschritt ein Schritt des Zerkleinerns oder Crackens der Pigmentkomponente ist, indem ermöglicht wird, dass die Mischungen, die im ersten Verarbeitungsschritt erhalten werden, in einem schrägen Winkel miteinander kollidieren.

5. Verfahren zur Herstellung einer Pigmentzusammensetzung nach Anspruch 3, wobei der zweite Verarbeitungsschritt ein Schritt des Zerkleinerns oder Crackens der Pigmentkomponente ist, indem ermöglicht wird, dass die Mischung, die im ersten Verarbeitungsschritt erhalten wird, mit einem kugelförmigen harten Körper kollidiert, der drehbar gelagert ist.

## Revendications

1. Procédé de production d'une composition pigmentaire pour encre, le procédé comprenant une première étape de traitement consistant à broyer ou à craquer un composant pigmentaire dans une composition de matières premières contenant le composant pigmentaire et un milieu liquide à l'aide d'une machine de traitement à rotor-stator, dans lequel
la machine de traitement est une machine de traitement en ligne dans laquelle la composition de la matière première est alimentée en continu,
la température de la première étape de traitement est comprise entre 50 et 80 °C, et
la machine de traitement a une vitesse circonférentielle comprise entre 15 m/s et 35 m/s.

2. Procédé de production d'une composition pigmentaire selon la revendication 1, dans lequel la composition pigmentaire est une composition pigmentaire pour encre d'impression à jet d'encre.

3. Procédé de production d'une composition pigmentaire selon la revendication 1 ou 2, comprenant en outre une seconde étape de traitement consistant à broyer ou à craquer le composant pigmentaire dans un mélange obtenu lors de la première étape de traitement.

4. Procédé de production d'une composition pigmentaire selon la revendication 3, dans lequel la seconde étape de traitement est une étape de broyage ou de craquage du composant pigmentaire en permettant aux mélanges obtenus lors de la première étape de traitement d'entrer en collision les uns avec les autres à un angle oblique.

5. Procédé de production d'une composition pigmentaire selon la revendication 3, dans lequel la seconde étape de traitement est une étape de broyage ou de craquage du composant pigmentaire en permettant au mélange obtenu lors de la première étape de traitement d'entrer en collision avec un corps dur en forme de boule supporté de manière rotative.
